# FASCICULE DE BREVET EUROPEEN

(11) **EP 3 994 370 B1**
(45) Date de publication et mention de la délivrance du brevet: **26.07.2023**
(21) Numéro de dépôt: 20760895.1
(22) Date de dépôt: 03.07.2020
(51) Int. Cl.: F16D 65/00, F16D 55/224

(54) **SYSTÈME DE SÉCURISATION DE PIÈCE MONTÉE SUR PORTE-SEMELLE**
SICHERUNGSSYSTEM FÜR EIN AUF EINEM BREMSKOPF MONTIERTES TEIL
SECURING SYSTEM FOR A PART MOUNTED ON A BRAKE HEAD

(30) Priorité: 03.07.2019 FR 1907417
(43) Date de publication de la demande: 11.05.2022
(73) Titulaire: Tallano Technologie, 75015 Paris (FR)
(72) Inventeur: MAISTRE, Adrien, 94300 VINCENNES (FR)
(74) Mandataire: Plasseraud IP
(86) Numéro de dépôt international: PCT/FR2020/051179
(87) Numéro de publication internationale: WO 2021/001639

(56) Documents cités:
- EP-A1- 2 816 250
- WO-A1-2019/025722
- FR-A1- 2 997 743

## Description

La présente invention concerne le freinage des matériels roulants ferroviaires et notamment les ensembles à friction des systèmes de freinage des matériels roulants ferroviaires. On entend par de tels matériels tous véhicules configurés pour rouler sur des rails, tels que trains, tramways, métropolitains.

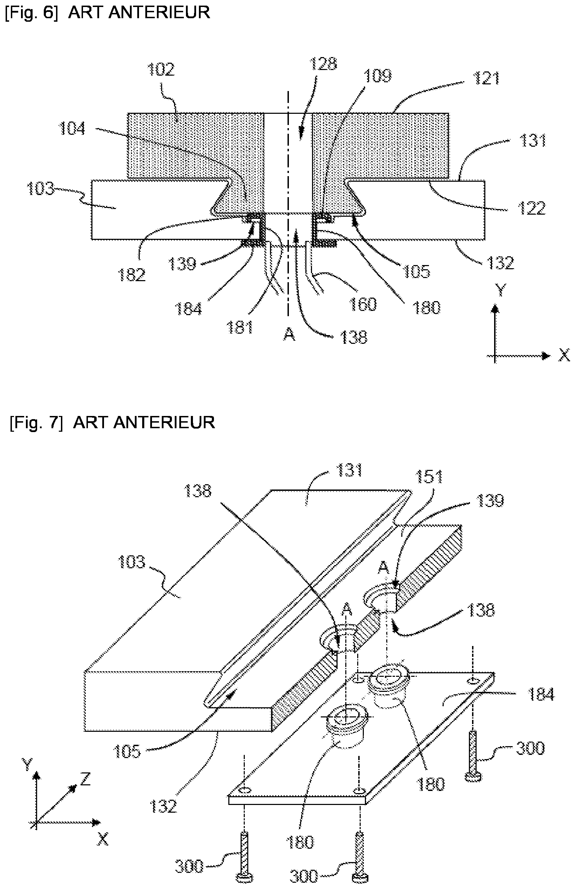

Le système de freinage comporte généralement un disque solidaire d'une roue ou d'un essieu du matériel roulant ferroviaire. Le système de freinage comporte en outre un ensemble à friction qui comprend un porte-semelle 103 qui supporte une semelle de friction 102. Un tel ensemble à friction est illustré en figure 6 et figure 7, qui représentent l'art antérieur. Le porte-semelle 103 s'étend longitudinalement selon une direction longitudinale Z, et transversalement selon une direction transversale X. Le porte-semelle 103 comporte dans le plan X-Z une face supérieure 131 destinée à accueillir la semelle de friction 102, et une face inférieure 132. L'axe perpendiculaire à ces deux faces et au plan X-Z est un axe Y.

La semelle de friction 102 comprend une face de friction 121 qui porte un patin frottant. Ce patin frottant est destiné à être en contact de friction avec le disque (non-représenté) solidaire de la roue ou de l'essieu afin d'exercer la force de freinage lorsqu'un conducteur actionne le système de freinage. Généralement, le matériel roulant ferroviaire comporte deux ensembles à friction, disposés de part et d'autre du disque de façon à prendre en tenaille, ou autrement dit en sandwich le disque pour le comprimer des deux côtés. La semelle de friction 102 comporte également une face opposée 122. Cette face opposée 122 est fixée au porte-semelle 103 par des moyens de fixation. En l'espèce, ces moyens de fixation comprennent un profilé 104 convexe en queue d'aronde sur la face opposée 122, et une glissière d'accueil 105 sur la face supérieure 131 du porte-semelle 103, ce profilé 104 étant configuré pour coopérer avec la glissière d'accueil 105. La glissière d'accueil 105 s'étend selon la direction longitudinale Z.

Lorsque la semelle de friction 102 frotte contre le disque, des particules de matière issues du patin frottant et du disque sont émises dans l'atmosphère ambiante autour de l'ensemble à friction. Ainsi, le système de freinage émet une pollution atmosphérique sous forme de particules plus ou moins fines. L'ensemble à friction décrit ci-dessus cherche à capter ces particules de matière émises lors du freinage.

Pour cela, la semelle de friction 102 comprend deux conduits 128 orientés selon l'axe Y. La semelle de friction 102 peut être en une ou deux parties. Dans ce dernier cas chacune de ces parties comporte un conduit 128. Le porte-semelle 103 comporte deux trous traversant 138. Lorsque la semelle de friction 102 est fixée sur le porte-semelle 103 en utilisation comme décrit ci-dessus, chacun des deux conduits 128 est situé en regard d'un trou 138. On désigne par axe A l'axe principal d'un conduit 128 et du trou 138 situé en regard, ce conduit 128 et ce trou 138 étant donc coaxiaux. Ainsi, chaque conduit 128 forme, avec un des trous traversant 138 ménagé dans le porte-semelle 103, un circuit qui permet d'aspirer des particules émises par la semelle de friction 102 lors du freinage.

Une bague de jonction 180, constituée d'un tube 181 et d'une collerette 182 prolongeant radialement et vers l'extérieur ce tube 181 à une de ses extrémités, est montée dans le trou 138. Le tube 181 est inséré dans le trou 138, le diamètre externe du tube 181 étant égal au diamètre interne du trou 138 afin d'assurer la meilleure étanchéité possible. La collerette 182 se loge dans un logement annulaire 139 du porte-semelle 103, ce logement 139 étant centré sur l'axe principal A et en regard de la face opposée 122 de la semelle 102. Ainsi, la collerette 182 est prise en sandwich entre la face inférieure 122 du profilé 104 de la semelle 102 et le fond 151 de la glissière 105 du porte-semelle 103.

La bague de jonction 180 traverse entièrement le porte-semelle 103 et en dépasse sur sa face inférieure 132. Sur cette extrémité du tube 181 de la bague 180 est fixé un tuyau 160 qui est relié à un dispositif d'aspiration (non-représenté) et qui permet l'aspiration au travers du conduit 128 et du trou 138 des particules issues du freinage du véhicule ferroviaire. La figure 6 illustre une coupe dans le plan XY contenant l'axe principal A, c'est-à-dire au niveau du conduit 128 et du trou 138.

La bague de jonction 180 sert à guider les particules issues du freinage depuis le conduit 128 de la semelle 102 vers le trou traversant 138 du porte-semelle 103. La bague de jonction 180 vise donc à prévenir d'éventuelles fuites au travers du conduit 128 et du trou 138.

Notamment, la bague de jonction 180 vise à limiter la quantité de particules issues du freinage qui pourraient se glisser dans l'interstice à l'interface entre la semelle de friction 102 et le porte-semelle 103, et surtout à empêcher un flux d'air provenant de l'extérieur de pénétrer par cet interstice dans le trou 138, ce qui dégraderait l'aspiration par le dispositif d'aspiration. Pour cela, la collerette 182 présente à son extrémité radialement externe une lèvre qui se replie vers le tube 181. La profondeur du logement annulaire 139 (selon l'axe principal A) est inférieure à la hauteur de la collerette 182 au repos de telle sorte que la collerette 182 dépasse au-dessus du fond 151 de la glissière 105. Lorsque le profilé 104 de la semelle 102 est inséré dans la glissière 105, ce profilé 104 appuie sur la bague 180 selon l'axe A de telle sorte que la lèvre de la collerette 182 se déforme pour remplir le logement 39. La collerette 182 vient ainsi en appui contre le profilé 104 pour assurer ainsi l'étanchéité entre la semelle de friction 102 et le porte-semelle 103. La collerette 182 est ainsi un mécanisme de rappel 109 qui plaque la collerette 182 contre le profilé 104.

Avantageusement, le tube 181 se prolonge à son extrémité opposée à l'extrémité portant la collerette 182 par une plaque 184 qui épouse la face inférieure 132 du porte-semelle 103. Lorsque le tube 181 est logé dans le trou 138, la plaque 184 est ainsi en appui sur la face inférieure 132. L'avantage de cette configuration est que la réalisation de l'étanchéité entre le porte-semelle 103 et la semelle 102 est réalisée de façon simple par insertion du tube 181 et de la collerette 182 dans le trou 183, sans qu'il soit nécessaire d'utiliser un mécanisme de rappel distinct.

De plus, la bague 180 est maintenue en place dans le trou 138 grâce à la plaque 184.

Comme représenté en figure 7, la plaque 184 porte deux bagues de jonction 180. Ainsi, le tube 181 de chacune des bagues 180 se prolonge à son extrémité opposée à l'extrémité portant la collerette 182 par la plaque 184.

Le porte-semelle 103 est représentée en perspective et en coupe longitudinale (dans le plan vertical Y-Z) en son milieu, c'est-à-dire au milieu de la glissière 105. L'ensemble de la plaque 184 et des bagues de jonction 180 est représenté en perspective éclatée. Les deux bagues 180 sont destinées à être insérées dans les trous 138 selon les axes principaux A, dans la direction de l'axe vertical Y.

L'avantage de cette variante est qu'avec un seul ensemble constitué de la plaque 184 et des bagues de jonction 180 il est possible de réaliser l'étanchéité entre tout le porte-semelle 103 et toute la, ou les, semelles 102.

La plaque 184 est fixée sur le porte-semelle 103 par des moyens mécaniques, par exemple par quatre boulons 300, comme illustré schématiquement en figure 7.

Ainsi, on connaît un ensemble à friction pour système de freins à disques ferroviaire pour matériel roulant ferroviaire, l'ensemble à friction comprenant d'une part un porte-semelle, et d'autre part au moins une semelle en matériau de friction comprenant une première face qui est la face de friction, et une seconde face opposée à ladite première face, la semelle étant apte à être solidarisée avec le porte-semelle, l'ensemble à friction comportant en outre une pièce apte à collecter les particules émises par ladite semelle (cette pièce est dans le cas ci-dessus l'ensemble constitué de la plaque 184 et les bagues de jonction 180).

En utilisation, sous l'effet des vibrations, des efforts subis par la semelle et le porte semelle, il existe un risque que la pièce se détache du porte-semelle. Cette perte de la pièce serait préjudiciable, en particulier compte tenu de la vitesse du véhicule.

Un tel ensemble est divulgué pour exemple dans le document WO 2019 025 722 A1.

### Description de l'invention

La présente invention vise à remédier à cet inconvénient.

L'invention vise à proposer un ensemble à friction dans lequel la solidarisation entre la pièce et le porte-semelle est sécurisée.

Ce but est atteint grâce au fait que la pièce comporte une liaison apte à coopérer avec un élément de fixation servant à fixer l'ensemble à friction sur une mâchoire de frein de telle sorte que la pièce est maintenue dans une position de solidarisation avec le porte-semelle lorsque l'élément de fixation fixe l'ensemble à friction sur la mâchoire de frein.

Grâce à ces dispositions, la pièce est maintenue dans sa position de solidarisation avec le porte-semelle, et ne peut sortir de cette position tant que l'élément de fixation fixe l'ensemble à friction sur la mâchoire de frein. La pièce est ainsi maintenue dans sa position de solidarisation par cet élément de fixation qui constitue une sécurité supplémentaire à une éventuelle liaison mécanique entre cette pièce et le porte-semelle. Cette sécurité supplémentaire est obtenue simplement en modifiant la pièce pour y ajouter la liaison.

Par exemple, la liaison entoure au moins partiellement l'élément de fixation.

Par exemple, l'élément de fixation est une tige, et la liaison est constituée d'au moins un anneau au travers duquel la tige est apte à coulisser.

Avantageusement la liaison est constituée de deux anneaux.

Ainsi, la pièce est maintenue plus efficacement dans sa position de solidarisation avec le porte-semelle.

Avantageusement, la semelle comprend au moins un conduit traversant la semelle depuis la première face jusqu'à la seconde face, le porte-semelle comprenant au moins un trou traversant d'axe central A et situé en regard d'un des au moins un conduit, et en ce que la pièce comporte une plaque et au moins une bague de jonction montée sur la plaque, la au moins une bague de jonction étant insérée dans au moins un trou traversant et établissant une jonction avec au moins un conduit, la pièce étant en position de solidarisation avec le porte-semelle lorsque la au moins une bague de jonction est insérée dans le au moins un trou traversant.

Ainsi, l'aspiration dans la ou les bagues de jonction des particules émises par la semelle de friction est plus efficace.

Avantageusement, l'ensemble à friction comporte deux bagues de jonction, deux conduits, et deux trous traversant.

L'invention sera bien comprise et ses avantages apparaîtront mieux, à la lecture de la description détaillée qui suit, de modes de réalisation représentés à titre d'exemples non limitatifs. La description se réfère aux dessins annexés sur lesquels :
[Fig. 1] est une vue en perspective d'une mâchoire de frein et d'un ensemble à friction selon l'invention ;
[Fig. 2] est une vue en perspective d'un ensemble à friction selon un mode de réalisation de l'invention ;
[Fig. 3] est une vue en perspective éclatée de l'ensemble à friction de la figure 2 ;
[Fig. 4] est une vue en perspective du porte-semelle et de la semelle d'un ensemble à friction selon un mode de réalisation de l'invention ;
[Fig. 5] est une vue en perspective éclatée du porte-semelle, de la semelle et de la pièce d'un ensemble à friction selon un mode de réalisation de l'invention ;
[Fig. 6], déjà décrite, est une coupe transversale du porte-semelle, de la semelle et de la plaque d'un ensemble à friction selon l'art antérieur ;
[Fig. 7], déjà décrite, est une vue en perspective et en coupe du porte-semelle et de la plaque d'un ensemble à friction selon l'art antérieur ;

### Description détaillée de l'invention

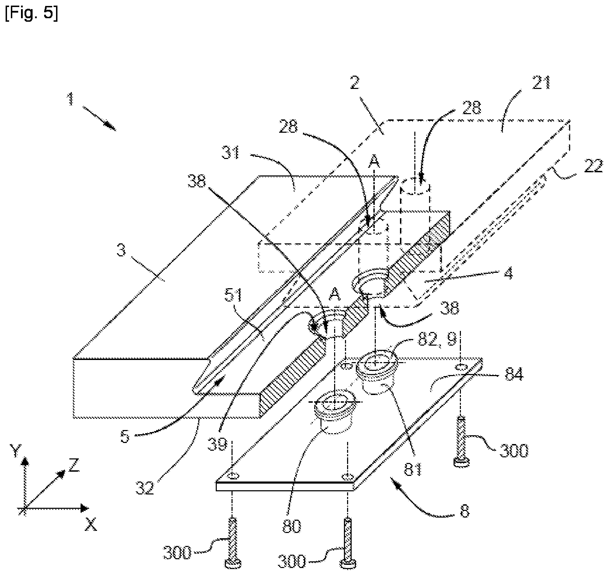

En référence à la figure 5, on décrit un ensemble à friction 1 qui comprend un porte-semelle 3 qui supporte une semelle de friction 2. Le porte-semelle 3 s'étend longitudinalement selon une direction longitudinale Z, et transversalement selon une direction transversale X. Le porte-semelle 3 comporte dans le plan X-Z une face supérieure 31 destinée à accueillir la semelle de friction 2, et une face inférieure 32. L'axe perpendiculaire à ces deux faces et au plan X-Z est un axe Y.

La semelle de friction 2 comprend une face de friction 21 qui porte un patin frottant. Ce patin frottant est destiné à être en contact de friction avec le disque (non-représenté) solidaire de la roue ou de l'essieu afin d'exercer la force de freinage lorsqu'un conducteur actionne le système de freinage. Généralement, le matériel roulant ferroviaire comporte deux ensembles à friction, disposés de part et d'autre du disque de façon à prendre en tenaille, ou autrement dit en sandwich le disque pour le comprimer des deux côtés. La semelle de friction 2 comporte également une face opposée 22. La semelle de friction 2 est solidarisée avec le porte-semelle 3 par des moyens de solidarisation de telle sorte que la face opposée 22 est en regard et épouse au moins partiellement la face supérieure 31. En l'espèce, ces moyens de solidarisation sont constitués d'un profilé 4 convexe en queue d'aronde sur la face opposée 22, et d'une glissière d'accueil 5 sur la face supérieure 31 du porte-semelle 3, ce profilé 4 étant configuré pour coopérer avec la glissière d'accueil 105. La glissière d'accueil 5 s'étend selon la direction longitudinale Z. En figure 5, la semelle 3 est représentée en perspective et en coupe longitudinale (dans le plan vertical Y-Z) en son milieu, c'est-à-dire au milieu de la glissière 5. La semelle 2 est représentée en traits pointillés par souci de clarté. La semelle 2 est représentée avec le profilé 4 partiellement engagé dans la glissière d'accueil 5.

D'autres moyens de solidarisation (4, 5) de de la semelle de friction 2 avec le porte-semelle 3 sont possibles. Avantageusement, ces moyens de solidarisation permettent une solidarisation amovible entre la semelle de friction 2 et le porte-semelle 3.

Lorsque la semelle de friction 2 frotte contre le disque, des particules de matière issues du patin frottant et du disque sont émises dans l'atmosphère ambiante autour de l'ensemble à friction.

Afin de capter ces particules, la semelle de friction 2 comprend une pièce 8. La pièce 8 est apte à collecter les particules et est située du côté de la face inférieure 32 du porte-semelle 3. Par exemple la pièce 8 est plaquée contre la face inférieure 32. Par exemple la pièce 8 est fixée sur la face inférieure 32.

On décrit ci-dessous l'invention dans le mode de réalisation où la pièce 8 comporte une ou plusieurs bagues de jonction 80 qui traversent le porte-semelle 3. Avantageusement, la pièce 8 comporte en outre une plaque 84 sur laquelle sont montées les bagues de jonction 80. Cependant la pièce 8 peut avoir toute autre géométrie et être constituée d'autres éléments que ceux décrits.

Afin de capter les particules de matière, la semelle de friction 2 comprend deux conduits 28 orientés selon l'axe Y. La semelle de friction 2 peut être en une ou deux parties. Dans ce dernier cas chacune de ces parties comporte un conduit 28. Le porte-semelle 3 comporte deux trous traversant 38. Lorsque la semelle de friction 2 est solidarisée avec le porte-semelle 3 en utilisation comme décrit ci-dessus, chacun des deux conduits 28 est situé en regard d'un trou 38. On désigne par axe A l'axe principal d'un conduit 28 et du trou 38 situé en regard, ce conduit 28 et ce trou 38 étant donc coaxiaux. Ainsi, chaque conduit 28 forme, avec un des trous traversant 38, un circuit qui permet d'aspirer des particules émises par la semelle de friction 2 lors du freinage, comme expliqué ci-dessous.

Une bague de jonction 80, constituée d'un tube 81 et d'une collerette 82 prolongeant radialement et vers l'extérieur ce tube 81 à une de ses extrémités, est montée dans le trou 38. Le tube 81 est inséré dans le trou 38, le diamètre externe du tube 81 étant égal au diamètre interne du trou 38 afin d'assurer la meilleure étanchéité possible. La collerette 82 se loge dans un logement annulaire 39 du porte-semelle 3, ce logement 39 étant centré sur l'axe principal A et en regard de la face opposée 22 de la semelle 2. Ainsi, la collerette 82 est prise en sandwich entre la face inférieure 22 du profilé 4 de la semelle 2 et le fond 51 de la glissière 5 du porte-semelle 3.

La bague de jonction 80 traverse entièrement le porte-semelle 3 et en dépasse sur sa face inférieure 32. Sur cette extrémité du tube 81 de la bague 80 est fixé un tuyau (non-représenté) qui est relié à un dispositif d'aspiration (non-représenté) et qui permet l'aspiration au travers du conduit 28 et du trou 38 des particules issues du freinage du véhicule ferroviaire.

La bague de jonction 80 sert à guider les particules issues du freinage depuis le conduit 28 de la semelle 2 vers le trou traversant 38 du porte-semelle 3. La bague de jonction 80 vise donc à prévenir d'éventuelles fuites au travers du conduit 28 et du trou 38.

Notamment, la bague de jonction 80 vise à limiter la quantité de particules issues du freinage qui pourraient se glisser dans l'interstice à l'interface entre la semelle de friction 2 et le porte-semelle 3, et surtout à empêcher un flux d'air provenant de l'extérieur de pénétrer par cet interstice dans le trou 38, ce qui dégraderait l'aspiration par le dispositif d'aspiration. Pour cela, la collerette 82 présente à son extrémité radialement externe une lèvre qui se replie vers le tube 81. La profondeur du logement annulaire 39 (selon l'axe principal A) est inférieure à la hauteur de la collerette 82 au repos de telle sorte que la collerette 82 dépasse au-dessus du fond 51 de la glissière 5. Lorsque le profilé 4 de la semelle 2 est inséré dans la glissière 5, ce profilé 4 appuie sur la bague 80 selon l'axe A de telle sorte que la lèvre de la collerette 82 se déforme pour remplir le logement 39. La collerette 82 vient ainsi en appui contre le profilé 4 pour assurer ainsi l'étanchéité entre la semelle de friction 2 et le porte-semelle 3. La collerette 82 constitue ainsi un mécanisme de rappel 9 qui plaque la collerette 82 contre le profilé 4. Alternativement, un dispositif de rappel 9 distinct de la collerette 82 (par exemple un ressort) peut plaquer la collerette 82 contre le profilé 4 pour assurer cette étanchéité.

Avantageusement, le tube 81 se prolonge à son extrémité opposée à l'extrémité portant la collerette 82 par une plaque 84 qui épouse la face inférieure 32 du porte-semelle 3. Lorsque le tube 81 est logé dans le trou 38, la plaque 84 est ainsi en appui sur la face inférieure 32. L'avantage de cette configuration est que la réalisation de l'étanchéité entre le porte-semelle 3 et la semelle 2 est réalisée de façon simple par insertion du tube 81 et de la collerette 82 dans le trou 83, sans qu'il soit nécessaire d'utiliser un mécanisme de rappel distinct. De plus, la bague 80 est maintenue en place dans le trou 38 grâce à la plaque 84. La pièce 8 comporte ainsi la (ou les) bagues 80 et la plaque 84.

Comme représenté en figure 5, la semelle 2 comporte deux conduits 28, et le porte-semelle 3 comporte deux trous 38. Les deux conduits 28 viennent en alignement (coaxialité d'axe A) avec les deux trous 38 lorsque le profilé 4 de la semelle 2 est totalement engagé avec la glissière d'accueil 5 du porte-semelle 3, c'est-à-dire lorsque la semelle 2 est solidarisée avec le porte-semelle 3. La semelle 2 est représentée avec le profilé 4 partiellement engagé dans la glissière d'accueil 5 de telle sorte qu'un seul des conduits 28 est en alignement avec un des trous 38.

La plaque 84 porte deux bagues de jonction 80. Ainsi, le tube 81 de chacune des bagues 80 se prolonge à son extrémité opposée à l'extrémité portant la collerette 82 par la plaque 84. Chacune des bagues 80 est destinée à être agencée et se loger dans un des trous 38.

Dans le cas général, la semelle 2 comprend au moins un conduit 28 traversant la semelle 2 depuis la première face 21 jusqu'à la seconde face 22 de la semelle 2, le porte-semelle 3 comprenant au moins un trou traversant 38 d'axe central A et situé en regard d'un du au moins un conduit 28, et au moins une bague de jonction 80 agencée dans le au moins un trou traversant 38 et établissant une jonction avec le au moins un conduit 28, la au moins une bague de jonction 80 étant montée sur une plaque 84.

Lorsque la pièce 8 est en position de solidarisation avec le porte-semelle 3, la au moins une bague de jonction 80 est insérée dans le au moins un trou traversant 38. La plaque 84 est fixée sur le porte-semelle 3 par des moyens mécaniques, par exemple par quatre boulons 300, comme illustré schématiquement en figure 5. La plaque 84 est alors perpendiculaire à l'axe principal A des conduits 28. Ainsi ces moyens mécaniques constituent une liaison mécanique entre la pièce 8 et le porte-semelle 3.

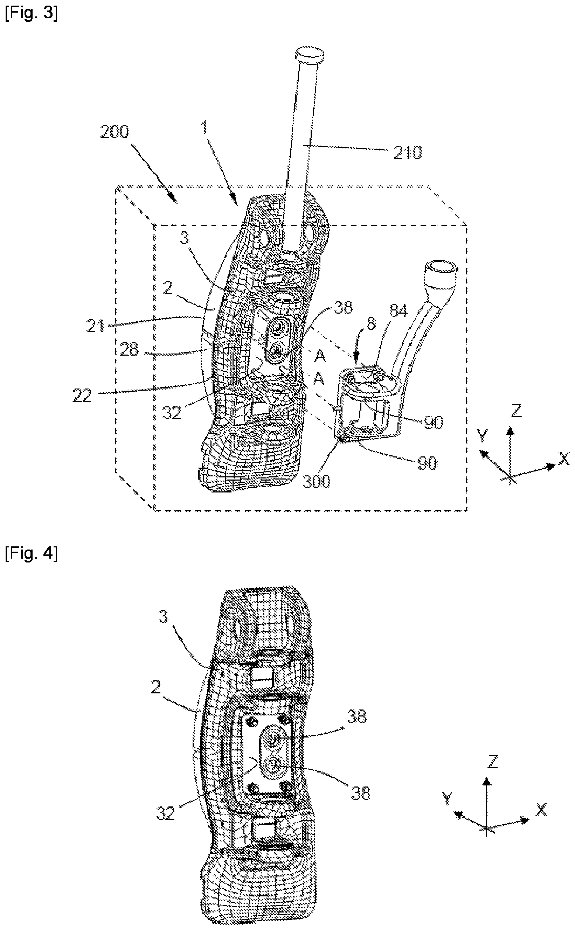

La figure 3 est une vue en perspective éclatée qui montre l'ensemble à friction 1 avec la semelle 2 solidarisée avec le porte-semelle 3, la plaque 84 étant séparée du porte-semelle 3 (translation selon l'axe Y, ou de façon équivalente selon l'axe principal A). Les deux bagues de jonction 80 ne sont pas directement visibles car elles s'étendent depuis la face cachée de la plaque 84.

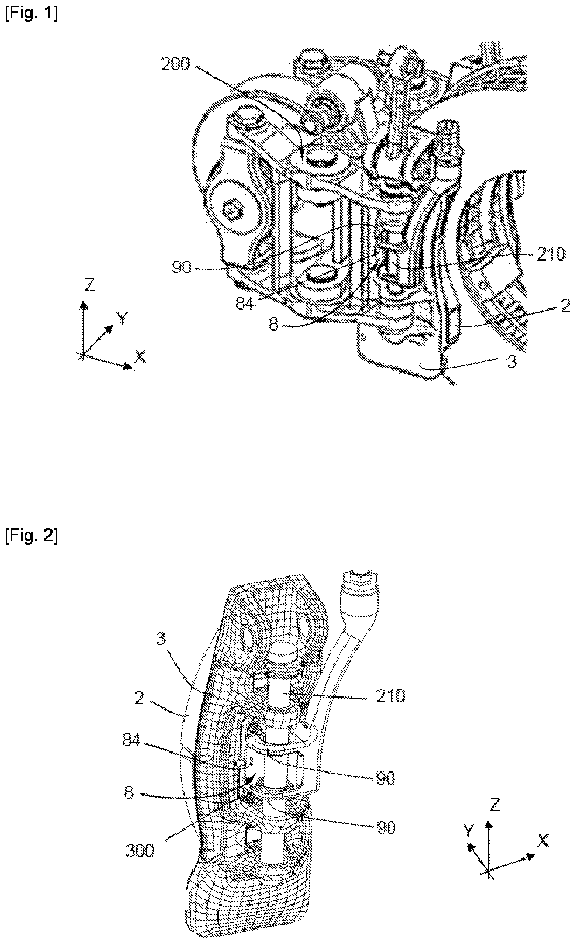

Un élément de fixation 210 sert à fixer l'ensemble à friction 1 sur une mâchoire de frein 200, qui est représentée schématiquement en pointillés en figure 3. Les éléments constituant cette mâchoire de frein 200 sont visibles en figure 1. Par exemple, cet élément de fixation 210 est une tige qui traverse des arceaux du porte-semelle 3 et des arceaux de la mâchoire de frein 200 (arceaux visibles sur la figure 1). Sur la figure 3 cette tige est représentée translatée selon son axe longitudinal de façon à ne pas être engagée dans les arceaux du porte-semelle 3. Comme illustré en figure 1, l'élément de fixation 210 est lui-même maintenu enfoncé dans les arceaux du porte-semelle 3 et les arceaux de la mâchoire de frein 200 par sa forme (tête de tige aplatie) et/ou par un autre élément de la mâchoire de frein.

En figure 3, la semelle 2 est solidarisée avec le porte-semelle 3. Seul l'orifice de sortie du trou traversant 38 au niveau de la face inférieure 32 du porte-semelle 3 est visible. Le trou traversant 38 qui traverse le porte-semelle 3, et le conduit 28 traversant la semelle 2 et qui se situe dans le prolongement du trou 38, ne sont pas directement visibles, et sont représentés en pointillés sur la figure 3.

La pièce 8 comporte une liaison 90 apte à coopérer avec cet élément de fixation 210 de telle sorte que la pièce 8 est maintenue dans sa position de solidarisation avec le porte-semelle 3 lorsque l'élément de fixation 210 fixe l'ensemble à friction 1 sur la mâchoire de frein 200. La liaison 90 est constituée par deux anneaux qui s'étendent sensiblement perpendiculairement depuis la plaque 84, en s'éloignant du porte-semelle 3. Les deux anneaux sont donc situés dans deux plans parallèles (Y, Z).

En l'espèce, l'élément de fixation 210, qui est une tige, traverse les deux anneaux de la liaison 90 de telle sorte que la plaque 84 est prise en sandwich entre cette tige et le porte-semelle 3. Etant donné que cette tige passe également dans les arceaux du porte-semelle 3, la pièce 8 est maintenue dans sa position de solidarisation avec le porte-semelle 3 par l'élément de fixation 210.

La figure 2 montre le même ensemble à friction 1, avec la pièce 8 en position de solidarisation avec le porte-semelle 3, et avec l'élément de fixation 210 en coopération avec la liaison 90 de la plaque 84 de telle sorte que la pièce 8 est maintenue dans cette position de solidarisation.

La figure 4 montre le même ensemble à friction 1, sans la pièce 8 et sans l'élément de fixation 210.

D'autres liaisons 90 que celle décrite ci-dessous sont possibles. Par exemple les anneaux formant la liaison 90 peuvent s'étendre sur une partie seulement d'une circonférence, ou la liaison 90 peut ne comporter qu'un seul anneau.

Plus généralement, la liaison 90 entoure au moins partiellement l'élément de fixation 210. Ainsi, dans le cas où la liaison 90 entoure seulement partiellement l'élément de fixation 210, la liaison 90 a une forme de « C » de façon à entourer une portion de l'élément de fixation 210 sans entourer l'élément de fixation 210 sur sa circonférence, c'est-à-dire sans former un anneau. Alternativement, dans le cas où la liaison 90 entoure totalement l'élément de fixation 210, la liaison 90 a une forme de « O » de façon à entourer une portion de l'élément de fixation 210 sur toute sa circonférence (en formant donc un anneau).

Dans tous les cas, la coopération mécanique (imbrication mécanique) entre la liaison 90 et l'élément de fixation 210 est réalisée de telle sorte que lorsque l'élément de fixation 210 fixe l'ensemble à friction 1 sur la mâchoire de frein 200, la pièce 8 est maintenue dans une position de solidarisation avec le porte-semelle 3 et ne peut pas être retirée.

La liaison 90 est formée en modifiant la plaque 84. Par exemple, cette modification est un ajout d'une pièce qui est rapportée et maintenue sur la plaque 84 par une liaison mécanique. Ainsi, les anneaux formant la liaison 90 peuvent être fixés mécaniquement sur la plaque 84 (par exemple par boulons-écrous).

Avantageusement la liaison 90 est formée en modifiant la forme de la plaque 84, c'est à dire sans ajout de pièce supplémentaire.

D'une manière générale, la pièce 8 (par exemple la plaque 84) est prise en sandwich entre l'élément de fixation 210 et le porte-semelle 3, ce qui maintient la pièce 8 en position de solidarisation avec le porte-semelle 3.

La liaison 90 permet en outre d'augmenter la rigidité de la plaque 84.

## Revendications

1. Ensemble à friction (1) pour système de freins à disques ferroviaire pour matériel roulant ferroviaire, ledit ensemble à friction (1) comprenant d'une part un porte-semelle (3), et d'autre part au moins une semelle (2) en matériau de friction comprenant une première face (21) qui est la face de friction, et une seconde face (22) opposée à ladite première face (21), ladite semelle (2) étant apte à être solidarisée avec ledit porte-semelle (3), ledit ensemble à friction (1) comportant en outre une pièce (8) apte à collecter les particules émises par ladite semelle (2), ladite pièce (8) étant **caractérisée en ce qu'**elle comporte une liaison (90) apte à coopérer avec un élément de fixation (210) servant à fixer ledit ensemble à friction (1) sur une mâchoire de frein (200) de telle sorte que ladite pièce (8) est maintenue dans une position de solidarisation avec ledit porte-semelle (3) lorsque ledit élément de fixation (210) fixe l'ensemble à friction (1) sur ladite mâchoire de frein (200).

2. Ensemble à friction (1) selon la revendication 1 caractérisé en ce ladite liaison (90) entoure au moins partiellement ledit élément de fixation (210).

3. Ensemble à friction (1) selon la revendication 2 **caractérisé en ce que** ledit élément de fixation (210) est une tige, et ladite liaison (90) est constituée d'au moins un anneau au travers desquels ladite tige est apte à coulisser.

4. Ensemble à friction (1) selon la revendication 3 **caractérisé en ce que** ladite liaison (90) est constituée de deux anneaux.

5. Ensemble à friction (1) selon l'une quelconque des revendications précédentes **caractérisé en ce que** ladite semelle (2) comprend au moins un conduit (28) traversant ladite semelle (2) depuis ladite première face (21) jusqu'à ladite seconde face (22), ledit porte-semelle (3) comprenant au moins un trou traversant (38) d'axe central A et situé en regard d'un dudit au moins un conduit (28), et **en ce que** ladite pièce (8) comporte une plaque (84) et au moins une bague de jonction (80) montée sur ladite plaque (84), ladite au moins une bague de jonction (80) étant insérée dans ledit au moins un trou traversant (38) et établissant une jonction avec ledit au moins un conduit (28), ladite pièce (8) étant en position de solidarisation avec ledit porte-semelle (3) lorsque ladite au moins une bague de jonction (80) est insérée dans ledit au moins un trou traversant (38),

6. Ensemble à friction (1) selon la revendication 5 **caractérisé en ce qu'**il comporte deux bagues de jonction (80), deux conduits (28), et deux trous traversant (38).

## Patentansprüche

1. Reibanordnung (1) für ein Eisenbahn-Scheibenbremssystem für rollendes Eisenbahnmaterial, wobei die Reibanordnung (1) einerseits einen Sohlenhalter (3) umfasst, und andererseits mindestens eine Bremssohle (2) aus Reibmaterial, die eine erste Seite (21), welche die Reibseite ist, und eine der ersten Seite (21) gegenüberliegende zweite Seite (22) umfasst, wobei die Bremssohle (2) mit dem Sohlenhalter (3) fest verbindbar ist, wobei die Reibanordnung (1) außerdem ein Teil (8) aufweist, das geeignet ist, die von der Bremssohle (2) abgegebenen Partikel zu sammeln, wobei das Teil (8) **dadurch gekennzeichnet ist, dass** es eine Verbindung (90) aufweist, die geeignet ist, mit einem Befestigungselement (210) zusammenzuwirken, das dazu dient, die Reibanordnung (1) an einer Bremsbacke (200) derart zu befestigen, dass das Teil (8) in einer Position der festen Verbindung mit dem Sohlenhalter (3) gehalten wird, wenn das Befestigungselement (210) die Reibanordnung (1) an der Bremsbacke (200) befestigt.

2. Reibanordnung (1) nach Anspruch 1, **dadurch gekennzeichnet, dass** die Verbindung (90) das Befestigungselement (210) wenigstens teilweise umgibt.

3. Reibanordnung (1) nach Anspruch 2, **dadurch gekennzeichnet, dass** das Befestigungselement (210) eine Stange ist und die Verbindung (90) aus wenigstens einem Ring besteht, durch den hindurch die Stange zu gleiten in der Lage ist.

4. Reibanordnung (1) nach Anspruch 3, **dadurch gekennzeichnet, dass** die Verbindung (90) aus zwei Ringen besteht.

5. Reibanordnung (1) nach einem der vorhergehenden Ansprüche, **dadurch gekennzeichnet, dass** die Bremssohle (2) wenigstens einen Kanal (28) umfasst, der die Bremssohle (2) von der ersten Seite (21) bis zur zweiten Seite (22) durchquert, wobei der Sohlenhalter (3) wenigstens ein Durchgangsloch (38) mit einer Mittelachse A umfasst, das sich gegenüber dem wenigstens einen Kanal (28) befindet, und dadurch, dass das Teil (8) eine Platte (84) und wenigstens eine auf der Platte (84) angebrachte Verbindungshülse (80) umfasst, wobei die wenigstens eine Verbindungshülse (80) in das wenigstens eine Durchgangsloch (38) eingesetzt ist und eine Verbindung mit dem wenigstens einen Kanal (28) herstellt, wobei sich das Teil (8) in einer Position der festen Verbindung mit dem Sohlenhalter (3) befindet, wenn die wenigstens eine Verbindungshülse (80) in das wenigstens eine Durchgangsloch (38) eingesetzt ist.

6. Reibanordnung (1) nach Anspruch 5, **dadurch gekennzeichnet, dass** sie zwei Verbindungshülsen (80), zwei Kanäle (28) und zwei Durchgangslöcher (38) aufweist.

## Claims

1. Friction assembly (1) for a railway disc brake system for railway rolling stock, said friction assembly (1) comprising a brake head (3) on the one hand, and on the other hand at least one wear plate (2) made of friction material comprising a first face (21) which is the friction face, and a second face (22) opposite to said first face (21), said wear plate (2) being suitable for being integrally secured to said brake head (3), said friction assembly (1) further comprising a part (8) able to collect the particles emitted by said wear plate (2), said part (8) being **characterized in that** it comprises a connection (90) able to engage with a fastening element (210) serving to fasten said friction assembly (1) to a brake shoe (200) such that said part (8) is held in a position of being integrally secured to said brake head (3) when said fastening element (210) is fastening the friction assembly (1) to said brake shoe (200).

2. Friction assembly (1) according to claim 1, wherein said connection (90) at least partially surrounds said fastening element (210).

3. Friction assembly (1) according to claim 2, wherein said fastening element (210) is a rod, and said connection (90) consists of at least one ring through which said rod is able to slide.

4. Friction assembly (1) according to claim 3, wherein said connection (90) consists of two rings.

5. Friction assembly (1) according to any one of the preceding claims, wherein said wear plate (2) comprises at least one channel (28) traversing said wear plate (2) from said first face (21) to said second face (22), said brake head (3) comprising at least one through-hole (38) of central axis A and located facing one among said at least one channel (28), and wherein said part (8) comprises a plate (84) and at least one joining bushing (80) mounted on said plate (84), said at least one joining bushing (80) being inserted into said at least one through-hole (38) and establishing a connection with said at least one channel (28), said part (8) being in a position of being integrally secured to said brake head (3) when said at least one joining bushing (80) is inserted in said at least one through-hole (38).

6. Friction assembly (1) according to claim 5, wherein it comprises two joining bushings (80), two channels (28), and two through-holes (38).
